# DEMANDE DE BREVET EUROPEEN

(11) **EP 4 795 983 A1**
(43) Date de publication de la demande: **26.08.2026**
(21) Numéro de dépôt: 26154710.3
(22) Date de dépôt: 28.01.2026
(51) Int. Cl.: A47J 27/21, A47J 36/06

(54) **APPAREIL DE CHAUFFAGE D'EAU COMPRENANT UN COUVERCLE POURVU D'UN CLAPET DE FERMETURE**

(30) Priorité: 19.02.2025 FR 2501709
(71) Demandeur: SEB S.A., 69130 Ecully (FR)
(72) Inventeur: SMAL, Chloé, 69134 ECULLY CEDEX (FR); MANSEAU, Charles, 69134 ECULLY CEDEX (FR); ALLEMAND, Bernard, 69134 ECULLY CEDEX (FR)
(74) Mandataire: SEB Développement

(57) **Abrégé**

L'appareil de chauffage d'eau (2) comprend un contenant (4) ; et un couvercle (11) comprenant un corps de couvercle (12) équipé d'une ouverture de remplissage (14), un clapet de fermeture (16) apte à occuper une position de fermeture dans laquelle le clapet de fermeture (16) obture l'ouverture de remplissage (14), et un dispositif d'étanchéité (18) configuré pour s'étendre autour de l'ouverture de remplissage (14) et pour être interposé entre le corps de couvercle (12) et le clapet de fermeture (16). Le dispositif d'étanchéité (18) est configuré pour définir, lorsque le clapet de fermeture (16) occupe la position de fermeture, une zone de condensation de vapeur (19).

## Description

### Domaine technique

La présente invention concerne le domaine des appareils de chauffage de liquides, et en particulier des bouilloires électriques.

### Etat de la technique

Le document DE202018104931 divulgue un appareil de chauffage d'eau, et plus particulièrement une bouilloire électrique, comprenant un contenant délimitant un volume interne destiné à contenir de l'eau et dans lequel l'eau est destinée à être chauffée et notamment portée à ébullition ; une poignée de préhension ; un bec verseur relié fluidiquement au volume interne ; et un couvercle configuré pour fermer le contenant.

Le couvercle comprend plus particulièrement :
- un corps de couvercle comprenant une ouverture de remplissage configurée pour être reliée fluidiquement au volume interne et à travers laquelle de l'eau peut être introduite dans le contenant,
- un clapet de fermeture mobile entre une position de fermeture dans laquelle le clapet de fermeture obture l'ouverture de remplissage et une position d'ouverture dans laquelle le clapet de fermeture libère l'ouverture de remplissage et autorise un remplissage du contenant avec de l'eau,
- un organe de rappel configuré pour rappeler le clapet de fermeture dans la position de fermeture, et
- un joint d'étanchéité annulaire configuré pour s'étendre autour de l'ouverture de remplissage et pour être interposé entre le corps de couvercle et le clapet de fermeture lorsque le clapet de fermeture occupe la position de fermeture.

Un tel joint d'étanchéité annulaire est soumis, à répétition, à d'importantes températures qui sont susceptibles de déformer, de façon irréversible, le joint d'étanchéité annulaire, et donc de nuire à l'étanchéité au niveau de l'ouverture de remplissage. Ainsi, après une utilisation prolongée de l'appareil de chauffage précité, de la vapeur est susceptible de s'échapper hors du contenant via l'ouverture de remplissage, ce qui est susceptible de causer des brûlures à l'utilisateur lors de la manipulation par ce dernier de l'appareil de chauffage d'eau, et également de nuire au fonctionnement de l'appareil de chauffage précité, et notamment d'un dispositif de contrôle électromécanique équipant l'appareil de chauffage d'eau.

Afin de pallier cet inconvénient, il est connu d'équiper l'appareil de chauffage précité avec un joint d'étanchéité annulaire qui est renforcé de manière à ne pas être altéré par la température régnant à l'intérieur du contenant, ce qui augmente les coûts de fabrication de l'appareil de chauffage.

### Résumé de l'invention

La présente invention vise à remédier à tout ou partie de ces inconvénients.

Le problème technique à la base de l'invention consiste notamment à fournir un appareil de chauffage d'eau qui soit de structure simple et économique, tout en présentant une grande sécurité d'utilisation.

A cet effet, la présente invention concerne un appareil de chauffage d'eau, tel qu'une bouilloire et par exemple une bouilloire électrique, comprenant :
- un contenant délimitant un volume interne destiné à contenir de l'eau et dans lequel l'eau est destinée à être chauffée et notamment portée à ébullition,
- un couvercle configuré pour fermer le contenant, et par exemple une ouverture supérieure du contenant, le couvercle comprenant :
   un corps de couvercle comprenant une ouverture de remplissage configurée pour être reliée fluidiquement au volume interne et à travers laquelle de l'eau peut être introduite dans le contenant,
   un clapet de fermeture mobile entre une position de fermeture dans laquelle le clapet de fermeture obture l'ouverture de remplissage et une position d'ouverture dans laquelle le clapet de fermeture libère l'ouverture de remplissage et autorise un remplissage du contenant avec de l'eau, et
   un dispositif d'étanchéité configuré pour s'étendre autour de l'ouverture de remplissage et pour être interposé, et par exemple formé, entre le corps de couvercle et le clapet de fermeture, et par exemple entre le corps de couvercle et une portion périphérique du clapet de fermeture, lorsque le clapet de fermeture occupe la position de fermeture,
   le dispositif d'étanchéité étant configuré pour définir, lorsque le clapet de fermeture occupe la position de fermeture, au moins une zone de condensation de vapeur dans laquelle est apte à se condenser de la vapeur provenant du volume interne du contenant, de manière à rendre étanche à la vapeur une zone de jonction entre le corps de couvercle et le clapet de fermeture.

Ainsi, lorsque l'eau contenue dans le contenant est portée à ébullition, une partie de la vapeur générée dans le contenant s'écoule entre le corps de couvercle et le clapet de fermeture occupant la position de fermeture, et se condense dans l'au moins une zone de condensation de vapeur. Les condensats, formés dans l'au moins une zone de condensation de vapeur, sont au moins en partie retenus dans cette dernière, et s'opposent ainsi ensuite à tout écoulement de vapeur d'eau à travers l'ouverture de remplissage. Le dispositif d'étanchéité selon la présente invention évite par conséquent tout échappement de vapeur via l'ouverture de remplissage, et ce sans requérir la présence d'un joint d'étanchéité onéreux.

Le dispositif d'étanchéité précité confère ainsi une sécurité d'utilisation accrue à l'appareil de chauffage d'eau selon la présente invention, tout en limitant les coûts de fabrication de ce dernier.

L'appareil de chauffage d'eau peut en outre présenter une ou plusieurs des caractéristiques suivantes, prises seules ou en combinaison.

Selon un mode de réalisation de l'invention, le couvercle comporte un organe de rappel, tel qu'un ressort de rappel, configuré pour rappeler le clapet de fermeture dans la position de fermeture.

Selon un mode de réalisation de l'invention, le dispositif d'étanchéité est un joint à nervures, et par exemple un joint à labyrinthe.

Selon un mode de réalisation de l'invention, le dispositif d'étanchéité est au moins en partie formé par le corps de couvercle et/ou le clapet de fermeture. Une telle configuration du dispositif d'étanchéité simplifie l'assemblage de l'appareil de chauffage d'eau et réduit ses coûts de fabrication.

Selon un mode de réalisation de l'invention, l'ouverture de remplissage est traversante et s'étend depuis une face supérieure du corps de couvercle jusqu'à une face inférieure du corps de couvercle.

Selon un mode de réalisation de l'invention, le clapet de fermeture est configuré pour être déplacé automatiquement dans la position d'ouverture sous l'effet de la pression de l'eau lors d'un remplissage du contenant. Une telle configuration du couvercle facilite un remplissage du contenant avec de l'eau.

Selon un mode de réalisation de l'invention, le dispositif d'étanchéité est configuré pour définir, lorsque le clapet de fermeture occupe la position de fermeture, au moins deux zones de condensation de vapeur, et par exemple au moins deux zones de condensation de vapeur qui sont sensiblement concentriques. Une telle configuration du dispositif d'étanchéité permet d'accroître encore la sécurité d'utilisation de l'appareil de chauffage d'eau selon la présente invention.

Selon un mode de réalisation de l'invention, le dispositif d'étanchéité comporte au moins une première nervure annulaire configurée pour s'étendre autour de l'ouverture de remplissage et une deuxième nervure annulaire s'étendant autour de la première nervure annulaire, les première et deuxième nervures annulaires étant configurées pour définir en partie l'au moins une zone de condensation de vapeur.

Selon un mode de réalisation de l'invention, l'au moins une zone de condensation de vapeur est délimitée au moins en partie par une paroi supérieure qui est inclinée par rapport à l'horizontale.

Selon un mode de réalisation de l'invention, la première nervure annulaire et la deuxième nervure annulaire sont prévues sur le corps de couvercle et sont configurées pour s'étendre vers le bas lorsque le contenant repose sur une surface horizontale.

Selon un mode de réalisation de l'invention, la première nervure annulaire et la deuxième nervure annulaire sont venues de matière avec le corps de couvercle. En d'autres termes, la première nervure annulaire, la deuxième nervure annulaire et le corps de couvercle sont réalisés en une seule pièce.

Selon un mode de réalisation de l'invention, la première nervure annulaire et la deuxième nervure annulaire sont venues de matière avec le clapet de fermeture. En d'autres termes, la première nervure annulaire, la deuxième nervure annulaire et le clapet de fermeture sont réalisés en une seule pièce.

Selon un mode de réalisation de l'invention, la première nervure annulaire et la deuxième nervure annulaire sont configurées pour que, lorsque le clapet de fermeture occupe la position de fermeture, une face supérieure du clapet de fermeture soit en contact avec la première nervure annulaire et la deuxième nervure annulaire.

Selon un mode de réalisation de l'invention, la première nervure annulaire et la deuxième nervure annulaire sont configurées pour que, lorsque le clapet de fermeture occupe la position d'ouverture, une face supérieure du clapet de fermeture soit à distance de la première nervure annulaire et de la deuxième nervure annulaire.

Selon un mode de réalisation de l'invention, l'une de la première nervure annulaire et de la deuxième nervure annulaire est prévue sur le corps de couvercle et l'autre de la première nervure annulaire et de la deuxième nervure annulaire est prévue sur le clapet de fermeture.

Selon un mode de réalisation de l'invention, au moins une zone de condensation de vapeur est délimitée en partie par le clapet de fermeture, la première nervure annulaire, et un bord périphérique inférieur de l'ouverture de remplissage.

Selon un mode de réalisation de l'invention, la première nervure annulaire et la deuxième nervure annulaire sont configurées pour coopérer avec une portion périphérique du clapet de fermeture lorsque le clapet de fermeture occupe la position de fermeture.

Selon un mode de réalisation de l'invention, les première et deuxième nervures annulaires sont sensiblement concentriques, et sont par exemple sensiblement concentriques par rapport à un axe central de l'ouverture de remplissage.

Selon un mode de réalisation de l'invention, les première et deuxième nervures annulaires sont globalement cylindriques.

Selon un mode de réalisation de l'invention, le dispositif d'étanchéité est configuré pour définir, lorsque le clapet de fermeture occupe la position de fermeture, au moins deux zones de condensation de vapeur, l'une des zones de condensation de vapeur étant délimitée au moins en partie par les première et deuxième nervures annulaires et le clapet de fermeture, et l'autre des zones de condensation de vapeur étant délimitée par au moins en partie la première nervure annulaire, un bord périphérique inférieur de l'ouverture de remplissage et le clapet de fermeture.

Selon un mode de réalisation de l'invention, l'ouverture de remplissage présente une section de passage qui diminue en direction du volume interne du contenant.

Selon un mode de réalisation de l'invention, le corps de couvercle comporte une paroi périphérique interne délimitant l'ouverture de remplissage et ayant une forme globalement tronconique qui se rétrécit vers le bas, c'est-à-dire vers le contenant.

Selon un mode de réalisation de l'invention, les première et deuxième nervures annulaires s'étendent vers le bas depuis une surface inférieure de la paroi périphérique interne délimitant l'ouverture de remplissage, ladite surface inférieure étant inclinée par rapport à l'horizontale lorsque le contenant repose sur une surface horizontale. L'au moins une zone de condensation de vapeur est ainsi par exemple délimitée par les première et deuxième nervures annulaires, la paroi périphérique interne et le clapet de fermeture.

Selon un autre mode de réalisation de l'invention, l'ouverture de remplissage présente une section de passage qui est constante le long d'un axe central de l'ouverture de remplissage. L'ouverture de remplissage peut par exemple être délimitée par une paroi périphérique interne de forme cylindrique.

Selon un mode de réalisation de l'invention, l'ouverture de remplissage présente une section circulaire.

Selon un mode de réalisation de l'invention, le clapet de fermeture a une forme générale de dôme.

Selon un mode de réalisation de l'invention, le couvercle est configuré de telle sorte que, lorsque le clapet de fermeture occupe la position de fermeture, un sommet du dôme est sensiblement centré par rapport à l'ouverture de remplissage.

Selon un mode de réalisation de l'invention, le dôme présente une symétrie de révolution autour d'un axe central.

Selon un mode de réalisation de l'invention, le clapet de fermeture est monté pivotant sur le corps de couvercle autour d'un axe de pivotement.

Selon un mode de réalisation de l'invention, l'axe de pivotement est configuré pour s'étendre sensiblement horizontalement lorsque le contenant repose sur une surface horizontale.

Selon un mode de réalisation de l'invention, l'appareil de chauffage d'eau comporte un bec verseur relié fluidiquement au volume interne.

Selon un mode de réalisation de l'invention, l'axe de pivotement est situé sensiblement à l'opposé du bec verseur.

Selon un mode de réalisation de l'invention, le clapet de fermeture est situé en regard d'une face inférieure du corps de couvercle, et est donc disposé en dessous de l'ouverture de remplissage.

Selon un mode de réalisation de l'invention, le couvercle est amovible par rapport au contenant.

Selon un mode de réalisation de l'invention, le couvercle est configuré pour être agencé au niveau de l'ouverture supérieure du contenant et pour fermer ladite ouverture supérieure, l'ouverture supérieure et l'ouverture de remplissage étant sensiblement coaxiales lorsque le couvercle est reçu sur le contenant.

Selon un mode de réalisation de l'invention, l'appareil de chauffage d'eau comporte une poignée de préhension, par exemple fixée au contenant.

Selon un mode de réalisation de l'invention, le contenant présente un axe central configuré pour s'étendre sensiblement verticalement lorsque le contenant repose sur une surface horizontale. De façon avantageuse, le bec verseur est situé à l'opposé de la poignée de préhension par rapport à l'axe central du contenant.

Selon un mode de réalisation de l'invention, l'appareil de chauffage d'eau comporte un dispositif de fixation configuré pour fixer de manière amovible, c'est-à-dire de manière temporaire et réversible, le couvercle au contenant.

Selon un mode de réalisation de l'invention, le dispositif de fixation est un dispositif de fixation à baïonnette.

Selon un mode de réalisation de l'invention, le couvercle comporte une partie de préhension configurée pour être manipulée par un utilisateur.

Selon un mode de réalisation de l'invention, le corps de couvercle est configuré pour reposer sur une surface d'appui périphérique prévue sur le contenant, et par exemple située au niveau de l'ouverture supérieure du contenant.

Selon un mode de réalisation de l'invention, le contenant comporte un fond chauffant situé sous le volume interne et configuré pour chauffer l'eau contenue dans le volume interne. De façon avantageuse, le fond chauffant loge un élément électrique chauffant.

Selon un mode de réalisation de l'invention, l'appareil de chauffage d'eau comporte un dispositif de contrôle électromécanique comportant un élément bimétallique, tel qu'un thermostat bimétallique, et un circuit d'acheminement de vapeur configuré pour diriger de la vapeur contenue dans le volume interne vers l'élément bimétallique, le dispositif de contrôle électromécanique étant configuré de telle sorte qu'un afflux de vapeur sur l'élément bimétallique déclenche un arrêt de la chauffe de l'appareil de chauffage d'eau.

Selon un mode de réalisation de l'invention, l'élément bimétallique est disposé dans le fond chauffant situé sous le volume interne. Selon un tel mode de réalisation de l'invention, le circuit d'acheminement de vapeur comporte un conduit d'acheminement de vapeur comprenant une extrémité supérieure débouchant dans une partie supérieure du contenant et une extrémité inférieure débouchant dans le fond chauffant. Le conduit d'acheminement de vapeur peut par exemple s'étendre en partie dans la poignée de préhension.

Selon un mode de réalisation de l'invention, l'appareil de chauffage d'eau comporte un dispositif de contrôle électromécanique comportant une sonde de température, le dispositif de contrôle électromécanique étant configuré pour déclencher un arrêt de la chauffe de l'appareil de chauffage d'eau lorsque la température mesurée par la sonde de température atteint une valeur de température seuil.

Selon un mode de réalisation de l'invention, l'appareil de chauffage d'eau comporte une base de support sur laquelle est destiné à reposer le contenant.

Selon un mode de réalisation de l'invention, le clapet de fermeture comporte une partie de manipulation configurée pour être manipulée par un utilisateur, la partie de manipulation étant configurée de telle sorte qu'un appui par un utilisateur sur ladite partie de manipulation entraîne un déplacement du clapet de fermeture dans la position d'ouverture.

### Brève description des figures

L'invention sera mieux comprise à l'aide de la description qui suit en référence aux dessins schématiques annexés représentant, à titre d'exemple non limitatif, une forme d'exécution de cet appareil de chauffage d'eau .
Figure 1 est une vue en perspective d'un appareil de chauffage d'eau selon un mode de réalisation de l'invention, une poignée de préhension de l'appareil de chauffage d'eau étant omise.
Figure 2 est une vue partielle en perspective de dessus de l'appareil de chauffage d'eau de la figure 1.
Figure 3 est une vue partielle en perspective de dessus d'un contenant de l'appareil de chauffage d'eau de la figure 1.
Figure 4 est une vue en perspective de dessus d'un couvercle de l'appareil de chauffage d'eau de la figure 1.
Figure 5 est une vue en perspective de dessous du couvercle de la figure 4.
Figure 6 est une vue en coupe longitudinale de l'appareil de chauffage d'eau de la figure 1.
Figure 7 est une vue partielle en coupe longitudinale de l'appareil de chauffage d'eau de la figure 1.
Figure 8 est une vue partielle en coupe longitudinale de l'appareil de chauffage d'eau de la figure 1.

### Description détaillée

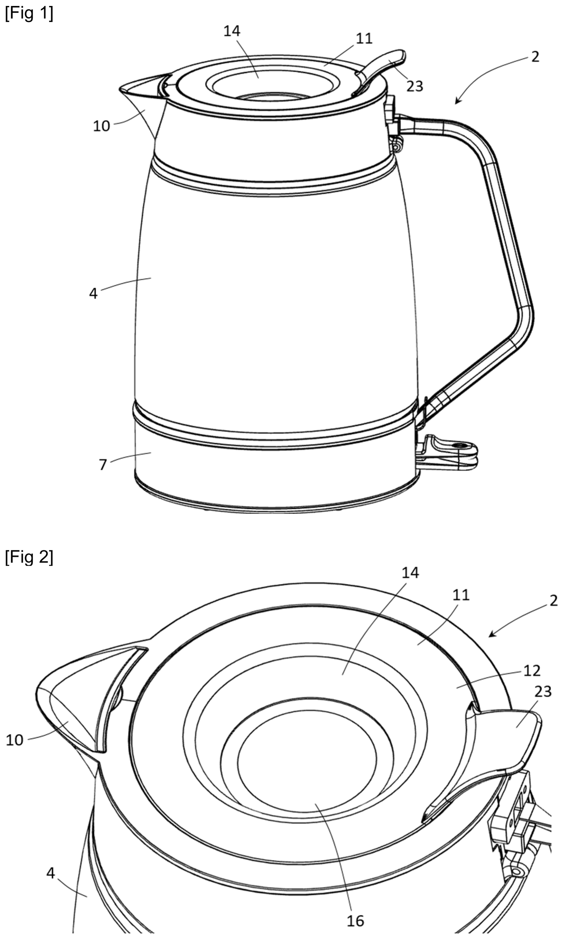

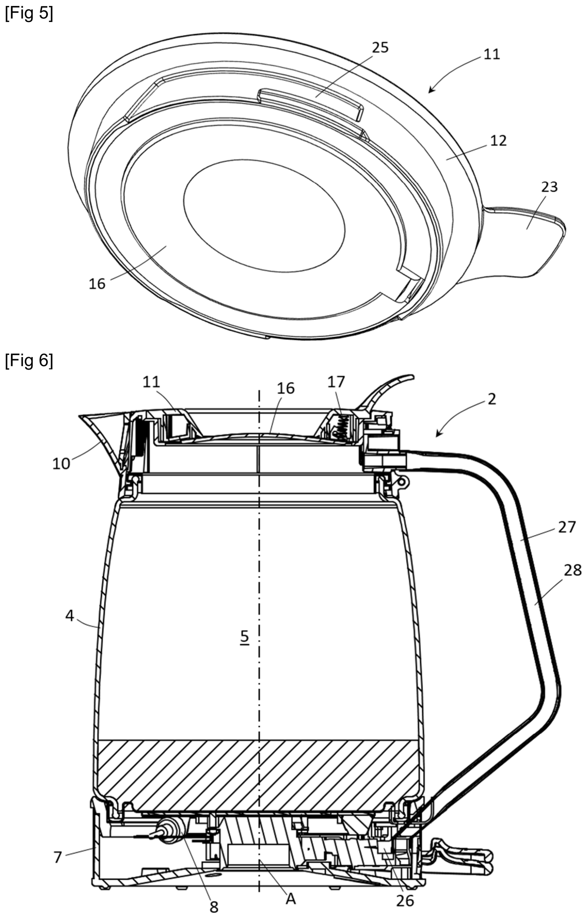

Les figures 1 à 8 représentent un appareil de chauffage d'eau 2, et en particulier une bouilloire électrique, selon un mode de réalisation de l'invention.

L'appareil de chauffage d'eau 2 comporte une base de support (non visible sur les figures) configurée pour être alimentée électriquement par un cordon d'alimentation (non représenté sur les figures), et un contenant 4 configuré pour reposer sur la base de support.

Le contenant 4 présente un axe central A configuré pour s'étendre sensiblement verticalement lorsque le contenant 4 repose sur une surface horizontale. De façon avantageuse, le contenant 4 présente une forme générale de révolution autour de l'axe central A.

Le contenant 4 délimite un volume interne 5 destiné à contenir de l'eau et dans lequel l'eau est destinée à être chauffée et notamment portée à ébullition. Le contenant 4 comprend en outre une ouverture supérieure 6 débouchant dans le volume interne 5.

Le contenant 4 comporte de plus un fond chauffant 7 situé sous le volume interne 5 et configuré pour chauffer l'eau contenue dans le volume interne 5. De façon connue, le fond chauffant 7 loge un élément électrique chauffant 8 configuré pour être alimenté électriquement lorsque le contenant 4 repose sur la base de support.

L'appareil de chauffage d'eau 2 comporte en outre une poignée de préhension (non représentée sur les figures) fixée au contenant 4, et un bec verseur 10 situé à l'opposé de la poignée de préhension par rapport à l'axe central A du contenant 4. Selon le mode de réalisation représenté sur les figures, le bec verseur 10 est prévu sur le contenant 4 et est situé au niveau de l'ouverture supérieure 6.

L'appareil de chauffage d'eau 2 comporte en outre un couvercle 11 configuré pour être agencé au niveau de l'ouverture supérieure 6 du contenant 4, et pour fermer le contenant 4.

Le couvercle 11 comporte plus particulièrement un corps de couvercle 12 configuré pour reposer sur une surface d'appui périphérique 13 prévue sur le contenant 4, et par exemple située au niveau de l'ouverture supérieure 6 du contenant 4. Le corps de couvercle 12 peut par exemple être formé par un corps inférieur 12.1 et un corps supérieur 12.2 qui sont assemblés l'un à l'autre, par exemple par encliquetage.

Le corps de couvercle 12 comprend plus particulièrement une ouverture de remplissage 14 configurée pour être reliée fluidiquement au volume interne 5 et à travers laquelle de l'eau peut être introduite dans le contenant 4. De façon avantageuse, l'ouverture de remplissage 14 est traversante et s'étend depuis une face supérieure du corps de couvercle 12 jusqu'à une face inférieure du corps de couvercle 12 qui est configurée pour être située en regard du volume interne 5 du contenant 4. L'ouverture de remplissage 14 peut par exemple présenter une section circulaire.

Selon le mode de réalisation représenté sur les figures, l'ouverture de remplissage 14 présente une section de passage qui diminue en direction du volume interne 5 du contenant 4. De façon avantageuse, le corps de couvercle 12 comporte une paroi périphérique interne 15 délimitant l'ouverture de remplissage 14 et ayant une forme globalement tronconique qui se rétrécit vers le bas, c'est-à-dire vers le contenant 4.

Le couvercle 11 comporte en outre un clapet de fermeture 16 monté mobile sur le corps de couvercle 12 entre une position de fermeture dans laquelle le clapet de fermeture 16 obture l'ouverture de remplissage 14 et une position d'ouverture dans laquelle le clapet de fermeture 16 libère l'ouverture de remplissage 14 et autorise un remplissage du contenant 4 avec de l'eau. De façon avantageuse, le clapet de fermeture 16 est situé en regard de la face inférieure du corps de couvercle 12, et est donc disposé en dessous de l'ouverture de remplissage 14.

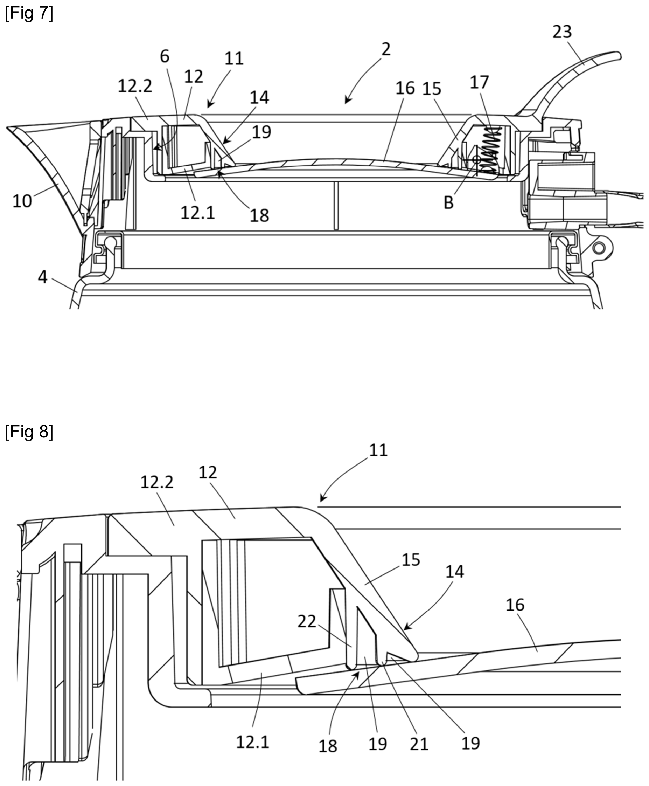

Selon le mode de réalisation représenté sur les figures, le clapet de fermeture 16 est monté pivotant sur le corps de couvercle 12 autour d'un axe de pivotement B (voir la figure 7). De façon avantageuse, l'axe de pivotement B est situé à l'opposé du bec verseur 10 par rapport à l'axe central du corps de couvercle 12, et est configuré pour s'étendre sensiblement horizontalement lorsque le contenant 4 repose sur une surface horizontale.

Selon le mode de réalisation représenté sur les figures, le clapet de fermeture 16 a une forme générale de dôme. De façon avantageuse, le dôme présente une symétrie de révolution autour d'un axe central, et le couvercle 11 est configuré de telle sorte que, lorsque le clapet de fermeture 16 occupe la position de fermeture, un sommet du dôme est sensiblement centré par rapport à l'ouverture de remplissage 14.

Le couvercle 11 comporte également un organe de rappel 17, tel qu'un ressort de rappel, interposé entre le corps de couvercle 12 et le clapet de fermeture 16, et configuré pour rappeler le clapet de fermeture 16 dans la position de fermeture. De façon avantageuse, le clapet de fermeture 16 est configuré pour être déplacé automatiquement dans la position d'ouverture (à l'encontre de la force de rappel exercée par l'organe de rappel 17) sous l'effet de la pression de l'eau lors d'un remplissage du contenant 4.

Le couvercle 11 comporte de plus un dispositif d'étanchéité 18 configuré pour s'étendre autour de l'ouverture de remplissage 14 et pour être interposé, et plus particulièrement pour être formé, entre le corps de couvercle 12 et le clapet de fermeture 16, et par exemple entre le corps de couvercle et une portion périphérique du clapet de fermeture 16, lorsque le clapet de fermeture 16 occupe la position de fermeture.

Le dispositif d'étanchéité 18 est configuré pour définir, lorsque le clapet de fermeture 16 occupe la position de fermeture, au moins une zone de condensation de vapeur 19 dans laquelle est apte à se condenser de la vapeur provenant du volume interne 5 du contenant 4, de manière à rendre étanche à la vapeur une zone de jonction entre le corps de couvercle 12 et le clapet de fermeture 16.

Selon le mode de réalisation représenté sur les figures, le dispositif d'étanchéité 18 est configuré pour définir, lorsque le clapet de fermeture 16 occupe la position de fermeture, deux zones de condensation de vapeur 19 qui sont sensiblement concentriques. Cependant, selon une variante de réalisation de l'invention, le dispositif d'étanchéité 18 pourrait être configuré pour définir une unique zone de condensation de vapeur 19 ou plus de deux zones de condensation de vapeur 19.

Comme montré plus particulièrement sur la figure 8, le dispositif d'étanchéité 18 comporte une première nervure annulaire 21 configurée pour s'étendre autour de l'ouverture de remplissage 14 et une deuxième nervure annulaire 22 s'étendant autour de la première nervure annulaire 21. De façon avantageuse, les première et deuxième nervures annulaires 21, 22 sont globalement cylindriques, et sont sensiblement concentriques par rapport à un axe central de l'ouverture de remplissage 14. Le dispositif d'étanchéité 18 forme ainsi un joint à nervures.

Selon le mode de réalisation représenté sur les figures, les première et deuxième nervures annulaires 21, 22 sont prévues sur le corps de couvercle 12, et sont configurées pour coopérer avec une portion périphérique du clapet de fermeture 16 lorsque le clapet de fermeture 16 occupe la position de fermeture. De façon avantageuse, les première et deuxième nervures annulaires 21, 22 s'étend au-delà du bord périphérique inférieur de l'ouverture de remplissage 14, et la deuxième nervure annulaire 22 s'étend au-delà du sommet, et donc du bord longitudinal inférieur, de la première nervure annulaire 21.

Comme montré sur la figure 8, les première et deuxième nervures annulaires 21, 22 sont configurées pour s'étendre vers le bas depuis une surface inférieure de la paroi périphérique interne 15 délimitant l'ouverture de remplissage 14, ladite surface inférieure étant inclinée par rapport à l'horizontale lorsque le contenant 4 repose sur une surface horizontale.

Selon le mode de réalisation représenté sur les figures, une première zone de condensation de vapeur 19 est délimitée par les première et deuxième nervures annulaires 21, 22, la paroi périphérique interne 15 et le clapet de fermeture 16, et une deuxième zone de condensation de vapeur 19 est délimitée par la première nervure annulaire 21, le bord périphérique inférieur de l'ouverture de remplissage 14 et le clapet de fermeture 16.

Lorsque le clapet de fermeture 16 est en position de fermeture, une face supérieure du clapet de fermeture 16 est en contact avec une extrémité inférieure de la première nervure annulaire 21, une extrémité inférieure de la deuxième nervure annulaire 22 et le bord périphérique inférieur de l'ouverture de remplissage 14 de sorte à former la première et la deuxième zones de condensation de vapeur 19.

Lorsque l'eau contenue dans le contenant 4 est portée à ébullition, une partie de la vapeur générée dans le contenant 4 s'écoule entre le corps de couvercle 12 et le clapet de fermeture 16 occupant la position de fermeture, et se condense dans la première zone de condensation de vapeur 19. Les condensats, formés dans la première zone de condensation de vapeur 19, sont au moins en partie retenus dans cette dernière, et s'opposent ainsi ensuite à tout écoulement de vapeur d'eau au-delà de la première zone de condensation de vapeur 19 et donc à travers l'ouverture de remplissage 14. Par sécurité, le dispositif d'étanchéité 18 comporte la deuxième zone de condensation de vapeur 19 au cas où de la vapeur parvenait, malgré la présence de la première zone de condensation de vapeur 19, à s'échapper au-delà de cette dernière.

Le dispositif d'étanchéité 18 selon la présente invention évite par conséquent tout échappement de vapeur via l'ouverture de remplissage 14 et tout risque de brûlure d'un utilisateur, et ce sans requérir la présence d'un joint d'étanchéité onéreux. Le dispositif d'étanchéité 18 confère ainsi une sécurité d'utilisation accrue à l'appareil de chauffage d'eau 2 selon la présente invention, tout en limitant les coûts de fabrication de ce dernier.

Selon le mode de réalisation représenté sur les figures, le couvercle 11 est amovible par rapport au contenant 4, et comporte une partie de préhension 23 configurée pour être manipulée par un utilisateur. De façon avantageuse, la partie de préhension 23 est située à l'opposé du bec verseur 10 par rapport à l'axe central de l'ouverture de remplissage 14.

L'appareil de chauffage d'eau 2 comporte de plus un dispositif de fixation configuré pour fixer de manière amovible, c'est-à-dire de manière temporaire et réversible, le couvercle 11 au contenant 4.

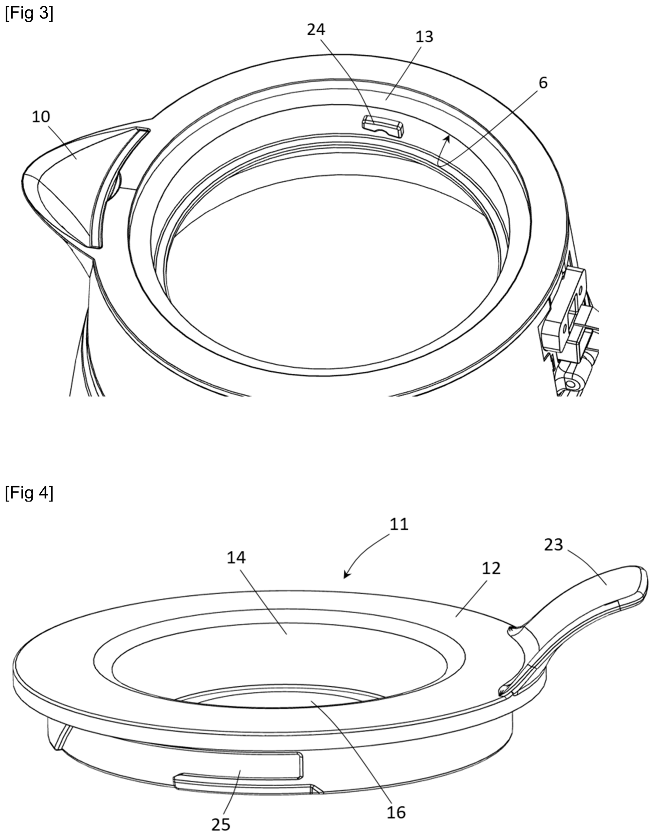

Selon le mode de réalisation représenté sur les figures, le dispositif de fixation comporte plusieurs éléments de fixation 24 (voir la figure 3), tels que des ergots de fixation, prévus sur le contenant 4, et par exemple sur le pourtour intérieur de l'ouverture supérieure 6 du contenant 4, et répartis autour de l'axe central A du contenant 4, et plusieurs organes de fixation 25 (voir la figure 4), tels que des rampes de fixation ou des rainures de fixation en « L », prévus sur le corps de couvercle 12, et par exemple sur une surface périphérique externe du corps de couvercle 12, et répartis autour de l'axe central de l'ouverture de remplissage 14, chaque organe de fixation 25 étant apte à coopérer avec un élément de fixation respectif 24, de manière à fixer le couvercle 11 au contenant 4. De façon avantageuse, les éléments de fixation 24 et les organes de fixation 25 forment un dispositif de fixation à baïonnette.

L'appareil de chauffage d'eau 2 comporte en outre un dispositif de contrôle électromécanique comportant un élément bimétallique 26, tel qu'un thermostat bimétallique, et un circuit d'acheminement de vapeur 27 configuré pour diriger de la vapeur contenue dans la chambre interne 11 vers l'élément bimétallique 26, le dispositif de contrôle électromécanique étant configuré de telle sorte qu'un afflux de vapeur sur l'élément bimétallique 26 déclenche un arrêt de la chauffe de l'appareil de chauffage d'eau 2.

L'élément bimétallique 26 peut par exemple être disposé dans le fond chauffant 7 situé sous le volume interne 5. Dans ce cas, le circuit d'acheminement de vapeur 27 comporte avantageusement un conduit d'acheminement de vapeur 28 comprenant une extrémité supérieure débouchant dans une partie supérieure du contenant 4 et une extrémité inférieure débouchant dans le fond chauffant 7. Le conduit d'acheminement de vapeur 28 peut par exemple s'étendre en partie dans la poignée de préhension. Selon une variante de réalisation de l'invention, l'élément bimétallique 26 pourrait être disposé dans la poignée de préhension.

Selon un mode de réalisation de l'invention non représenté sur les figures, l'ouverture de remplissage 14 pourrait présenter une section de passage qui est constante le long d'un axe central de l'ouverture de remplissage 14. L'ouverture de remplissage 14 peut ainsi par exemple être délimitée par une paroi périphérique interne 15 de forme cylindrique.

Bien entendu, la présente invention n'est nullement limitée aux modes de réalisation décrits et illustrés qui n'ont été donnés qu'à titre d'exemples. Des modifications restent possibles, notamment du point de vue de la constitution des divers éléments ou par substitution d'équivalents techniques, sans sortir pour autant du domaine de protection de l'invention.

## Revendications

1. Appareil de chauffage d'eau (2) comprenant :
- un contenant (4) délimitant un volume interne (5) destiné à contenir de l'eau et dans lequel l'eau est destinée à être chauffée,
- un couvercle (11) configuré pour fermer le contenant (4), le couvercle (11) comprenant :
∘ un corps de couvercle (12) comprenant une ouverture de remplissage (14) configurée pour être reliée fluidiquement au volume interne (5) et à travers laquelle de l'eau peut être introduite dans le contenant (4),
∘ un clapet de fermeture (16) mobile entre une position de fermeture dans laquelle le clapet de fermeture (16) obture l'ouverture de remplissage (14) et une position d'ouverture dans laquelle le clapet de fermeture (16) libère l'ouverture de remplissage (14) et autorise un remplissage du contenant (4) avec de l'eau, et
∘ un dispositif d'étanchéité (18) configuré pour s'étendre autour de l'ouverture de remplissage (14) et pour être interposé entre le corps de couvercle (12) et le clapet de fermeture (16) lorsque le clapet de fermeture (16) occupe la position de fermeture,
**caractérisé en ce que** le dispositif d'étanchéité (18) est un joint à nervures configuré pour définir, lorsque le clapet de fermeture (16) occupe la position de fermeture, au moins une zone de condensation de vapeur (19) dans laquelle est apte à se condenser de la vapeur provenant du volume interne (5) du contenant (4).

2. Appareil de chauffage d'eau (2) selon la revendication 1, dans lequel le dispositif d'étanchéité (18) comporte au moins une première nervure annulaire (21) configurée pour s'étendre autour de l'ouverture de remplissage (14) et une deuxième nervure annulaire (22) s'étendant autour de la première nervure annulaire (21), les première et deuxième nervures annulaires (21, 22) étant configurées pour définir en partie l'au moins une zone de condensation de vapeur (19).

3. Appareil de chauffage d'eau (2) selon la revendication 2, dans lequel la première nervure annulaire (21) et la deuxième nervure annulaire (22) sont prévues sur le corps de couvercle (12) et sont configurées pour s'étendre vers le bas lorsque le contenant (4) repose sur une surface horizontale.

4. Appareil de chauffage d'eau (2) selon la revendication 2 ou 3, dans lequel la première nervure annulaire (21) et la deuxième nervure annulaire (22) sont configurées pour coopérer avec une portion périphérique du clapet de fermeture (16) lorsque le clapet de fermeture (16) occupe la position de fermeture.

5. Appareil de chauffage d'eau (2) selon l'une quelconque des revendications 2 à 4, dans lequel les première et deuxième nervures annulaires (21, 22) sont sensiblement concentriques.

6. Appareil de chauffage d'eau (2) selon l'une quelconque des revendications 2 à 5, dans lequel le dispositif d'étanchéité (18) est configuré pour définir, lorsque le clapet de fermeture (16) occupe la position de fermeture, au moins deux zones de condensation de vapeur (19), l'une des zones de condensation de vapeur (19) étant délimitée au moins en partie par les première et deuxième nervures annulaires (21, 22) et le clapet de fermeture (16), et l'autre des zones de condensation de vapeur (19) étant délimitée par au moins en partie la première nervure annulaire (21), un bord périphérique inférieur de l'ouverture de remplissage (14) et le clapet de fermeture (16).

7. Appareil de chauffage d'eau (2) selon l'une quelconque des revendications 1 à 6, dans lequel l'ouverture de remplissage (14) présente une section de passage qui diminue en direction du volume interne (5) du contenant (4).

8. Appareil de chauffage d'eau (2) selon l'une quelconque des revendications 1 à 7, dans lequel le clapet de fermeture (16) a une forme générale de dôme.

9. Appareil de chauffage d'eau (2) selon l'une quelconque des revendications 1 à 8, dans lequel le clapet de fermeture (16) est monté pivotant sur le corps de couvercle (12) autour d'un axe de pivotement (B).

10. Appareil de chauffage d'eau (2) selon l'une quelconque des revendications 1 à 9, dans lequel le clapet de fermeture (16) est situé en regard d'une face inférieure du corps de couvercle (12).

11. Appareil de chauffage d'eau (2) selon l'une quelconque des revendications 1 à 10, dans lequel le couvercle (11) est amovible par rapport au contenant (4).

12. Appareil de chauffage d'eau (2) selon l'une quelconque des revendications 1 à 11, dans lequel le clapet de fermeture (16) est configuré pour être déplacé automatiquement dans la position d'ouverture sous l'effet de la pression de l'eau lors d'un remplissage du contenant (4).

13. Appareil de chauffage d'eau (2) selon l'une quelconque des revendications 1 à 12, dans lequel le couvercle (11) est configuré pour être agencé au niveau d'une ouverture supérieure (6) du contenant (4) et pour fermer ladite ouverture supérieure (4), l'ouverture supérieure (4) et l'ouverture de remplissage (14) étant sensiblement coaxiales lorsque le couvercle (11) est reçu sur le contenant (4).

14. Appareil de chauffage d'eau (2) selon l'une quelconque des revendications 1 à 13, dans lequel le couvercle (11) comporte un organe de rappel (17) configuré pour rappeler le clapet de fermeture (16) dans la position de fermeture.
